# EUROPÄISCHE PATENTSCHRIFT

(11) **EP 2 312 271 B1**
(45) Veröffentlichungstag und Bekanntmachung des Hinweises auf die Patenterteilung: **23.10.2013**
(21) Anmeldenummer: 10009069.5
(22) Anmeldetag: 01.09.2010
(51) Int. Cl.: G01C 13/00

(54) **Verfahren zur Bestimmung von Seegangsgrößen**
Method of determining swell sizes
Procédé de détermination de grandeurs de houle

(30) Priorität: 10.09.2009 DE 102009041055
(43) Veröffentlichungstag der Anmeldung: 20.04.2011
(73) Patentinhaber: ThyssenKrupp Marine Systems GmbH, 24143 Kiel (DE)
(72) Erfinder: Bauer, Markus, 85354 Freising (DE); Diekmann, Andreas, 85586 Poing (DE); Zheng, Qinghua, 82024 Taufkirchen (DE)
(74) Vertreter: Vollmann, Heiko

(56) Entgegenhaltungen:
- US-A- 5 769 020
- US-B1- 6 382 022

## Beschreibung

Die Erfindung betrifft ein Verfahren zur Bestimmung von Seegangsgrößen.

Auf die Stabilität des Schwimm- bzw. Fahrverhaltens von Wasserfahrzeugen haben Seegangsgrößen entscheidenden Einfluss. Beispielsweise kann es bei bestimmten Begegnungsfrequenzen der Wasserwellen mit dem Wasserfahrzeug zu parametererregten Rollschwingungen kommen. Diese führen im Resonanzfall zu stark erhöhten Rollwinkeln. Beispielsweise sind bei großen Containerschiffen Rollwinkel von mehr als 20° berichtet worden. Um Situationen, die die Stabilität eines Wasserfahrzeugs beeinträchtigen können, zuverlässig vorhersagen zu können, ist es notwendig, Seegangsgrößen, wie etwa die Wellenrichtung und die Wellenperiode, zu erfassen.

Dazu ist es bekannt, freischwimmende Wellenbojen, beispielsweise den "Directional Waverider MK lll" des niederländischen Herstellers Datawell BV einzusetzen. Auch verankerte Bojen werden für die Messung von Seegangsgrößen eingesetzt, beispielsweise im Moored Buoy Programm des US-Departments of Commerce, National Oceanic and Atmospheric Administration. Nachteilig am Einsatz vom Bojen ist es jedoch, dass diese die Seegangsgrößen nur an wenigen Orten erfassen, sodass nur bedingt genau auf diejenigen Seegangsgrößen geschlossen werden kann, die die Stabilität des Wasserfahrzeugs gefährden.

Verbesserungen nutzen gegenwärtig Radareinrichtungen des Wasserfahrzeugs, um Seegangsgrößen am Ort des Wasserfahrzeugs selbst zu erfassen. Jedoch hängt die Signalqualität solcher Radareinrichtungen von den Witterungsbedingungen ab. Insbesondere bei starkem Regen oder Schneefall wird das Radarsignal und damit die Bestimmung von Seegangsgrößen beeinträchtigt. Ferner besteht keine direkte Beziehung zwischen rückgestreutem Radarsignal und der Wellenhöhe.

Ein weiteres Wellenmesssystem ist bekannt aus US6382022 und berechnet aus der Position des Wasserfahrzeugs, aus dem Abstand des Wasserfahrzeugs zur Wasseroberfläche und aus der Neigung sowie der Rollbewegung die Seegangsgrößen (Höhe, die Richtung und die Wellenlänge) der Meereswellen.

Es ist daher Aufgabe der Erfindung, ein in dieser Hinsicht verbessertes Verfahren zur Bestimmung von Seegangsgrößen bereitzustellen. Insbesondere soll dieses Verfahren eine hohe Genauigkeit aufweisen und witterungsunabhängig sein.

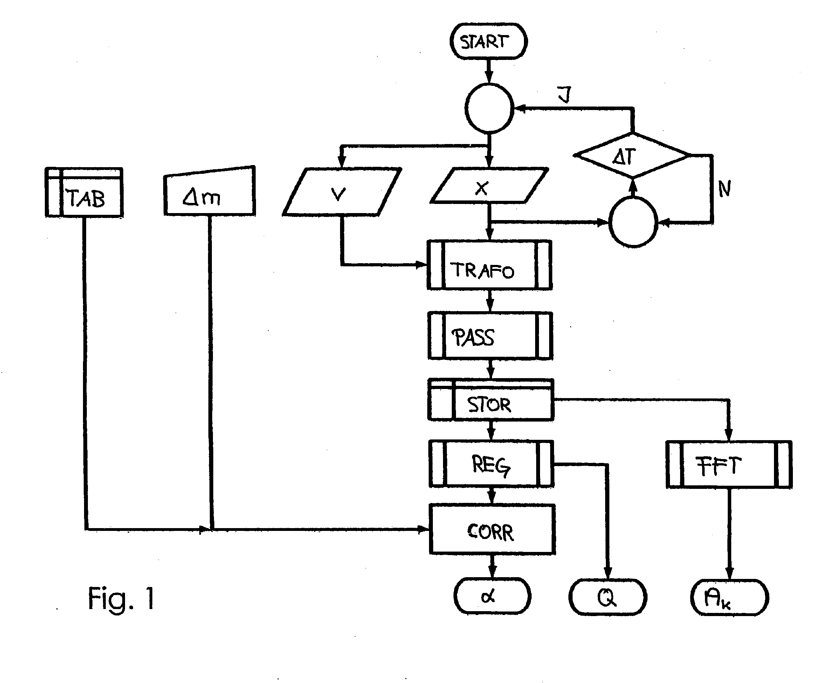

Diese Aufgabe wird durch ein Verfahren mit den im Anspruch 1 angegebenen Merkmalen gelöst. Vorteilhafte Weiterbildungen der Erfindung ergeben sich aus den Unteransprüchen, der nachfolgenden Beschreibung und der Zeichnung.

Das erfindungsgemäße Verfahren zur Bestimmung von Seegangsgrößen wird auf einem Wasserfahrzeug durchgeführt. Dabei wird die Schwerpunktsbewegung des Wasserfahrzeugs erfasst. Bei dem Verfahren werden von den Seegangsgrößen abhängende Parameter der Schwerpunktsbewegung ermittelt und eine oder mehrere Seegangsgrößen aus diesen Parametern bestimmt.

Mit dem erfindungsgemäßen Verfahren erfolgt die Bestimmung von Seegangsgrößen am Ort des Wasserfahrzeugs selbst. Damit gewährleistet das Verfahren eine Bestimmung der für die Stabilität des Wasserfahrzeugs relevanten Seegangsgrößen mit einer verbesserten Genauigkeit. Vorteilhaft kann eine Bestimmung von Seegangsgrößen unabhängig von den Witterungsbedingungen erfolgen. Ferner sind bei dem erfindungsgemäßen Verfahren sämtliche für die Stabilität des Wasserfahrzeugs relevanten Seegangsgrößen bestimmbar, beispielsweise die Wellenhöhe. Das erfindungsgemäße Verfahren weist damit sämtliche Vorteile der aus dem Stand der Technik bekannten Verfahren auf, ohne jedoch den Beschränkungen dieser Verfahren zu unterliegen. So erfolgt die Bestimmung der Seegangsgrößen zugleich witterungsunabhängig wie bei der Beobachtung von Wellenbojen als auch am Ort des Wasserfahrzeugs wie bei der Nutzung von Radareinrichtungen an Bord des Wasserfahrzeugs. Vorteilhaft werden bei dem erfindungsgemäßen Verfahren gerade diejenigen Anteile des Seegangs erfasst, welche einen wesentlichen Einfluss auf die Stabilität des Wasserfahrzeugs haben. So haben beispielsweise diejenigen Wasserwellen, deren Wellenlänge deutlich kleiner ist als die auf die Ausbreitungsrichtung der Wasserwellen projizierte Abmessung des Wasserfahrzeugs einen vernachlässigbaren Einfluss auf die Schwerpunktsbewegung des Wasserfahrzeugs. Diese Wasserwellen haben zugleich nur einen unwesentlichen Einfluss auf die Stabilität des Wasserfahrzeugs. Für die Stabilität des Wasserfahrzeugs unwesentliche Anteile des Seegangs werden durch das erfindungsgemäße Verfahren typischerweise nicht ermittelt. Ferner erfordert die Durchführung des Verfahrens nicht zwangsläufig großen apparativen Aufwand, da die Erfassung der Schwerpunktsbewegung beispielsweise einfach mittels Bewegungssensoren erfolgen kann.

Bevorzugt wird bei dem erfindungsgemäßen Verfahren die Schwerpunktsbewegung in mehreren, das Wasserfahrzeug passierenden Wellenzügen und/oder während mehrerer Perioden der das Wasserfahrzeug passierenden Wasserwellen statistisch berücksichtigt. Diese statistische Berücksichtigung während mehrerer Wellenperioden bzw. in mehreren Wellenzügen erlaubt es, beispielsweise durch eine geeignete Mittelung oder durch Ausgleichsrechnungen, die Schwerpunktsbewegung des Wasserfahrzeugs mit einer guten Genauigkeit zu erfassen. Vorzugsweise wird bei dem Verfahren die Schwerpunktsbewegung für eine Dauer von 5 bis 30 Minuten erfasst, insbesondere für eine Dauer von weniger als 20 Minuten. Typischerweise reicht für die Bestimmung von Seegangsgrößen eine Erfassung der Schwerpunktsbewegung des Wasserfahrzeugs für eine Dauer von 10 Minuten bereits aus. Damit ist die erforderliche Dauer zur Erfassung der Schwerpunktsbewegung deutlich kürzer als die typischen Erfassungszeiträume bei der Verwendung von Wellenbojen, welche regelmäßig 30 Minuten erreichen oder überschreiten. Unter einer dauerhaften Erfassung der Schwerpunktsbewegung ist in diesem Zusammenhang zum einen eine kontinuierliche Erfassung der Schwerpunktsbewegung zu verstehen. Jedoch kann hierunter auch eine Vielzahl von zeitlich aufeinanderfolgenden Einzelmessungen während der Erfassungsdauer zu verstehen sein. Zweckmäßigerweise erfolgen diese Einzelmessungen in einem regelmäßigen zeitlichen Abstand, welcher sehr viel kleiner ist als die für das Wasserfahrzeug typischerweise auftretenden Bewegungsperioden, beispielsweise in einem zeitlichen Abstand von 0,1 Sekunden. Idealerweise werden bei dem erfindungsgemäßen Verfahren die erfassten Daten auch in diesem zeitlichen Abstand ausgewertet.

Idealerweise werden bzw. wird bei dem Verfahren die Ausbreitungsrichtung und/oder die Wellenperiode der Wasserwellen als Seegangsgrößen bestimmt. Gerade die Ausbreitungsrichtung und die Wellenperiode der Wasserwellen haben einen großen Einfluss auf die Stabilität eines Wasserfahrzeugs bei der Fahrt. lnsbesondere kann durch die Bestimmung der Ausbreitungsrichtung und/oder der Wellenperiode der Wasserwellen die Gefahr parametererregter Rollschwingungen des Wasserfahrzeugs erkannt werden, sodass ggf. Kurs bzw. Kursgeschwindigkeit des Wasserfahrzeugs geeignet geändert werden können.

Bevorzugt wird bzw. werden bei dem erfindungsgemäßen Verfahren der zeitliche Verlauf und/oder der Wertebereich zumindest einer kinematischen Größe der Schwerpunktsbewegung erfasst.

Vorzugsweise ist bei dem erfindungsgemäßen Verfahren die kinematische Größe der Ort. So kann beispielsweise bereits allein aus dem Wertebereich, den der Ort des Schwerpunkts des Wasserfahrzeugs einnimmt, die Ausbreitungsrichtung der Wasserwellen relativ zum Wasserfahrzeug bestimmt werden.

ldealerweise ist bei dem erfindungsgemäßen Verfahren eine Seegangsgröße die Ausbreitungsrichtung der Wasserwellen, wobei die Orientierung der längsten Hauptachse einer Bahnkurve, die vom Schwerpunkt des Wasserfahrzeugs beschrieben wird, ein von der Seegangsgröße abhängender Parameter ist.

Typischerweise beschreibt der Schwerpunkt des Wasserfahrzeugs eine Bahnkurve in Form einer Ellipse. Trifft etwa eine Welle von vorn auf den Bug des Wasserfahrzeugs, so taucht das Wasserfahrzeug aufgrund des ansteigenden Wasserspiegels zunächst tiefer ein und wird dadurch nach oben beschleunigt. Ferner wird das Wasserfahrzeug dabei auch nach achtern beschleunigt. Erreicht der Wellenberg das Heck des Wasserfahrzeugs, so kehren sich die Bewegungsverhältnisse gerade um, d. h. das Wasserfahrzeug wird nach unten und nach vorn beschleunigt. Die Bewegung des Schwerpunkts des Wasserfahrzeugs erfolgt somit entlang einer Bahnkurve in Form einer Ellipse. Die Orientierung der längsten Hauptachse dieser Ellipse ist ein von der Ausbreitungsrichtung der Wasserwellen abhängender Parameter. lm Folgenden wird die längste Hauptachse zur Abgrenzung gegenüber weiteren Hauptachsen auch erste Hauptachse genannt.

Die Wellenorientierung, d. h. die Lage der normal zu den Wellenfronten verlaufenden Achse, entspricht der Projektion der größten Hauptachse der Ellipse auf die horizontale Ebene. Die Orientierung der längsten Hauptachse der Ellipse legt somit die Ausbreitungsrichtung der Wasserwellen bis auf das Vorzeichen fest. Die Ausbreitungsrichtung der Wasserwellen weist dabei in diejenige Richtung entlang der Wellenorientierung, welche mit der Richtung, in die das aufwärts geneigte Ende der längsten Hauptachse der Ellipse weist, den kleineren Winkel einschließt. Auf diese Weise kann aus dem Wertebereich, den der Ort des Schwerpunkts des Wasserfahrzeugs einnimmt, die Ausbreitungsrichtung der Wasserwellen bestimmt werden. Alternativ oder ergänzend kann die Ausbreitungsrichtung der Wasserwellen aus dem zeitlichen Verlauf des Ortes des Schwerpunkts des Wasserfahrzeugs bestimmt werden, beispielsweise durch Bestimmung des Laufsinns des Schwerpunkts auf der elliptischen Bahnkurve.

Zweckmäßigerweise wird bei dem Verfahren die mittlere Abweichung der Schwerpunktsbewegung von der längsten Hauptachse der Bahnkurve erfasst und als Gütekriterium für die Bestimmung der Seegangsgröße verwendet. Beispielsweise kann die zweite - und/oder die bei realem Seegang und in Folge dessen der dreidimensionalen Bahnbewegung des Schwerpunkts auftretende dritte - Hauptachse der Bahnkurve als Maß für die mittlere Abweichung der Bewegung von der längsten Hauptachse herangezogen werden. lnsbesondere wird ein Gütekriterium aus dem Vergleich der mittleren Amplituden der Bewegung entlang der zweiten und/oder dritten Hauptachse mit der mittleren Amplitude der Bewegung entlang der ersten Hauptachse bestimmt. Beispielsweise kann auf eine gute Qualität der Ermittlung der Ausbreitungsrichtung wie oben beschrieben geschlossen werden, wenn die mittlere Abweichung der Bewegung klein gegenüber der Amplitude der Bewegung entlang der längsten Hauptachse ist. Auf eine schlechte Qualität hingegen wird geschlossen, wenn die mittlere Abweichung der Bewegung groß gegenüber der Amplitude der Bewegung entlang der längsten Hauptachse ist. Eine gute Qualität wird ferner festgestellt, wenn die erste Hauptachse deutlich, d. h. um etwa 45°, geneigt ist. Auf eine schlechte Qualität hingegen kann geschlossen werden, wenn die erste Hauptachse der Bahnkurve nahezu senkrecht oder nahezu waagerecht orientiert ist. Im Falle einer senkrechten oder waagerechten Orientierung der ersten Hauptachse kann die Bestimmung der Ausbreitungsrichtung der Wasserwellen beispielsweise ausgesetzt werden. Die mittleren Abweichungen bzw. die Amplituden der Bewegung entlang der zweiten und/oder dritten Hauptachse werden zweckmäßigerweise mittels eines zwei- oder dreidimensionalen Regressionsverfahrens ermittelt. ldealerweise wird bei dem erfindungsgemäßen Verfahren die kinematische Größe auf Hauptachsen transformiert.

Alternativ oder zusätzlich ist die kinematische Größe bzw. sind die kinematischen Größen die Geschwindigkeit und/oder die Beschleunigung. Beispielsweise finden die oben näher beschriebenen Verfahren zur Bestimmung der Ausbreitungsrichtung der Wasserwellen entsprechende Anwendung. Beispielsweise beschreiben auch die Geschwindigkeit und die Beschleunigung des Schwerpunkts des Wasserfahrzeugs typischerweise Bahnkurven in Form von Ellipsen, bei denen charakteristische Parameter dieser Ellipsen von der Ausbreitungsrichtung der Wasserwellen abhängen. Die Beschleunigung wird zweckmäßigerweise mittels Beschleunigungssensoren erfasst.

In einer bevorzugten Weiterbildung des erfindungsgemäßen Verfahrens wird das Frequenzspektrum der Schwerpunktsbewegung erfasst. Beispielsweise ist das Frequenzspektrum der Schwerpunktsbewegung bei Wasserwellen mit einer Wellenlänge, die wesentlich größer als die Projektion des Rumpfes des Wasserfahrzeugs auf die Wellenorientierung ist, gleich dem Frequenzspektrum der Wasserwellen.

Weiter bevorzugt wird bei dem erfindungsgemäßen Verfahren die Höhe der Wasserwellen als Seegangsgröße bestimmt. Beispielsweise folgt bei Wasserwellen, deren Wellenlänge deutlich größer als die Projektion des Rumpfes des Wasserfahrzeugs auf die Wellenorientierung ist, der Schwerpunkt des Wasserfahrzeugs direkt dem Wellenverlauf. Taucht das Wasserfahrzeug beim Durchfahren der Welle hingegen unterschiedlich tief ein, so führt dieser Umstand zu einer Abweichung zwischen Schwerpunktsbewegung und Wellenverlauf. Diese Abweichung, die mittlere Eintauchtiefe, wird hier beispielsweise aus der Beschleunigung des Wasserfahrzeugs in senkrechter Richtung unter Berücksichtigung des Auftriebskennfeldes des Wasserfahrzeugs ermittelt. Ferner bevorzugt wird die Wellenperiode der Wasserwellen bestimmt.

Bevorzugt wird bei dem erfindungsgemäßen Verfahren die Schwerpunktsbewegung vor ihrer Auswertung in erdfeste Koordinaten transformiert. In dieser Weiterbildung der Erfindung ist sichergestellt, dass Kurs und Geschwindigkeit des Wasserfahrzeugs bzw. deren Änderungen während der Dauer der Schwerpunktserfassung die Bestimmung der Seegangsgrößen nicht verfälschen.

Ferner bevorzugt wird bei dem Verfahren die Schwerpunktsbewegung hinsichtlich des Kurses und/oder der Geschwindigkeit des Wasserfahrzeugs korrigiert. Insbesondere wird die Schwerpunktsbewegung hinsichtlich der Änderungen von Kurs und/oder Geschwindigkeit des Wasserfahrzeugs korrigiert. So kann die ausschließlich durch den Seegang induzierfe Bewegung des Wasserfahrzeugs analysiert werden. Zu diesem Zweck ist es hinreichend, lediglich die horizontalen Anteile der Schwerpunktsbewegung zu filtern. Beispielsweise werden die Messdaten hochpassgefiltert. Bei der Hochpassfilterung wird zweckmäßigerweise die Grenzfrequenz derart gewählt, dass durch den Seegang induzierte Bewegungen im Wesentlichen ungeändert bleiben, die Wechsel der Geschwindigkeit und/oder des Kurses des Wasserfahrzeugs hingegen heraus gefiltert werden. Vorteilhaft wird die Grenzfrequenz größer oder gleich der Rate von Kurs- und/oder Geschwindigkeitswechsein des Wasserfahrzeugs gewählt. Beispielhaft ist eine solche Grenzfrequenz 40 mHz. Bevorzugt wird ein Regressionsverfahren nach einer solchen Korrektur durchgeführt.

Geeigneterweise werden bei dem erfindungsgemäßen Verfahren Referenzdaten aus Messungen und/oder Simulationen für die Fahrt des Wasserfahrzeugs vorgehalten, welche zur Anpassung und/oder Korrektur der ermittelten Seegangsgrößen genutzt werden. Beispielsweise erfolgt eine Steigerung der Genauigkeit des erfindungsgemäßen Verfahrens durch Berücksichtigung hydrodynamischer Eigenschaften des jeweiligen Wasserfahrzeugs und der Wellencharakteristik. Zweckmäßigerweise wird durch Simulationsrechnung und/oder Messung die Abhängigkeit beispielsweise der ermittelten Ausbreitungsrichtung der Wasserwellen vom Relativwinkel zwischen Kurs des Wasserfahrzeugs und Ausbreitungsrichtung der Wasserwellen ermittelt und in einer Tabelle eingetragen. Mittels der Tabelle kann eine später ermittelte Ausbreitungsrichtung der Wasserwellen korrigiert werden.

Bevorzugt werden bei dem Verfahren die Unterschiede der Bootsform in Quer- und Längsrichtung mittels einer Tabelle und/oder eines Kennfeldes berücksichtigt und die Seegangsgrößen entsprechend korrigiert. Ferner bevorzugt werden die ermittelten Seegangsgrößen hinsichtlich der Begegnungsfrequenz und/oder der Geschwindigkeit des Wasserfahrzeugs und/oder des Beladungszustands des Wasserfahrzeugs korrigiert.

Zweckmäßigerweise wird das Verfahren auf einem Unterseeboot bei Überwasserfahrt eingesetzt. Ferner bevorzugt wird das Verfahren auf Containerschiffen und Yachten eingesetzt.

Die Erfindung ist nachfolgend anhand eines in der Zeichnung dargestellten Ausführungsbeispiels beschrieben. Die Zeichnungsfigur zeigt ein erfindungsgemäßes Verfahren zur Ermittelung der Ausbreitungsrichtung der Wasserwellen sowie des Frequenzspektrums in einem Flussdiagramm.

Das in der Figur dargestellte Verfahren dient zur Ermittlung der Ausbreitungsrichtung der Wasserwellen und wird zur Vorhersage der Stabilität des Fahrverhaltens auf einem Containerschiff gestartet (START). Bei dem Verfahren wird eine Messung **x** der Position, also der Ortskoordinaten, des Schiffsschwerpunkts durchgeführt. Nach einer solchen Messung wird geprüft ΔT, ob eine Wartezeit bis zur Vornahme der nächsten Messung **x** abgelaufen ist. Sofern dies nicht der Fall ist, wird so lang in einer Warteschleife N verharrt, bis die Wartezeit erreicht J ist. Ist dies der Fall, wird eine erneute Messung **x** der Schwerpunktsposition des Schiffs vorgenommen. Entsprechend wird die Schwerpunktsposition des Schiffs in regelmäßigen Zeitabständen - hier der Wartezeit 0,1 Sekunden - vermessen. Mit derselben Messrate erfolgt eine Messung **v** des Schiffskurses und der Geschwindigkeit. Die Messergebnisse der Messungen **x** und **v** werden für eine Koordinatentransformation TRAFO der gemessenen Position des Schiffsschwerpunkts genutzt.

Die Koordinatentransformation TRAFO liefert die Positionsdaten des Schiffsschwerpunkts in erdfesten Koordinaten. Die Einflüsse von Kurs-und Geschwindigkeitswechseln des Schiffs sind damit weitgehend aus den Daten herausgerechnet.

Um ausschließlich die durch den Seegang induzierte Schiffsbewegung analysieren zu können, werden die Positionsdaten ferner mit einem Hochpassfilter mit einer Grenzfrequenz von 40 mHz gefiltert PASS. Diese Filterung erstreckt sich dabei lediglich auf die horizontalen Positionsdaten, welche durch Kurs- und Geschwindigkeitswechsel des Schiffs beeinflussbar sind.

Die derart gefilterten Daten werden von einem Datenspeicher erfasst STOR und für jeweils einen Analysezeitraum von 10 Minuten zwischengespeichert.

Die derart zeitaufgelösten Positionsdaten des Schiffsschwerpunkts werden zum einen einer schnellen Fourier-Transformation FFT unterzogen, deren Ergebnis das Frequenzspektrum Aₖ des Seegangs bereitstellt. Ferner wird mit den zwischengespeicherten Daten eine Datenregression REG durchgeführt, welche die vom Schiffschwerpunkt beschriebene Bahnkurve auf Hauptachsen transformiert.

Die bei der Datenregression REG ermittelte Orientierung der längsten Hauptachse der Bahnkurve wird mit tabellierten Daten TAB hinsichtlich der hydrodynamischen Eigenschaften des Schiffs sowie hinsichtlich tabellierter Daten zur Schiffsbeladung Δm korrigiert CORR. Mittels der korrigierten Orientierung der längsten Hauptachse der Bahnkurve wird die Ausbreitungsrichtung der Wasserwellen α ermittelt.

In der Datenregression REG wird ferner die Amplitude der Schwerpunktsbewegung entlang der zweiten und dritten Hauptachse ermittelt und in Beziehung zur Amplitude der Bewegung entlang der ersten Hauptachse gesetzt. Ein hieraus abgeleiteter Qualitätswert Q wird als Gütekriterium ausgegeben. Das Gütekriterium weist eine gute Qualität der Bestimmung der Wellenlaufrichtung aus, wenn die mittlere Abweichung der Bewegung entlang der zweiten und dritten Hauptachse klein gegenüber der Amplitude der Bewegung entlang der ersten Hauptachse ist und wenn die Orientierung der ersten Hauptachse von einer senkrechten oder waagerechten Orientierung deutlich unterschieden werden kann.

### Bezugszeichenliste

- START: - Start des Verfahrens
- **x**: - Messung der Schwerpunktsposition
- *ΔT*: - Prüfung auf Ablauf der Wartezeit
- N: - Warteschleife
- J: - Wiederholung der Messungen x und v
- **v**: - Messung des Schiffskurses und der Kursgeschwindigkeit
- TRAFO: - Koordinatentransformation
- PASS: - Hochpassfilterung
- STOR: - Zwischenspeicherung
- FFT: - Fourier-Transformation
- Aₖ: - Frequenzspektrum des Seegangs
- REG: - Datenregression
- Q: - Qualitätswert
- _{*Δ*m}: - Schiffsbeladung
- TAB: - Tabellierte Daten
- CORR: - Korrigieren der Daten
- α: - Ausbreitungsrichtung der Wasserwellen

## Patentansprüche

1. Verfahren zur Bestimmung von Seegangsgrößen (α, Aₖ) auf einem Wasserfahrzeug, bei welchem die Schwerpunktsbewegung des Wasserfahrzeugs erfasst wird (x), bei welchem von den Seegangsgrößen (α, Aₖ) abhängende Parameter der Schwerpunktsbewegung ermittelt werden und bei welchem eine oder mehrere See-gangsgrößen (α, Aₖ) aus diesen Parametern bestimmt (REG, FFT) wird bzw. werden.

2. Verfahren nach Anspruch 1, bei welchem die Schwerpunktsbewegung in mehreren, das Wasserfahrzeug passierenden Wellenzügen statistisch berücksichtigt wird.

3. Verfahren nach Anspruch 1 oder 2, bei welchem die Schwerpunktsbewegung für eine Dauer von 5 bis 30 Minuten erfasst wird.

4. Verfahren nach einem der Ansprüche 1 bis 3, bei welchem die Ausbreitungsrichtung (α) und/oder die Wellenperiode der Wasserwellen als die Seegangsgrößen (α, Aₖ) bestimmt (REG, FFT) werden.

5. Verfahren nach einem der Ansprüche 1 bis 4, bei welchem der zeitliche Verlauf und/oder der Wertebereich zumindest einer kinematischen Größe der Schwerpunktsbewegung erfasst (x) wird bzw. werden.

6. Verfahren nach Anspruch 5, bei welchem die kinematische Größe der Ort ist.

7. Verfahren nach Anspruch 6, bei welchem eine Seegangsgröße (α) die Ausbreitungsrichtung (α) der Wasserwellen ist und bei welchem die Orientierung der längsten Hauptachse einer Bahnkurve, die vom Schwerpunkt des Wasserfahrzeugs beschriebenen wird, ein von der Seegangsgröße (α) abhängender Parameter ist.

8. Verfahren nach Anspruch 7, bei welchem die mittlere Abweichung der Schwerpunktsbewegung von der Hauptachse der Bahnkurve erfasst wird und als Gütekriterium (Q) für die Bestimmung der Seegangsgröße (α, Aₖ) verwendet wird.

9. Verfahren nach einem der Ansprüche 5 bis 8, bei welchem die kinematische Größe die Geschwindigkeit und/oder die Beschleunigung ist.

10. Verfahren nach einem der Ansprüche 5 bis 9, bei welchem die kinematische Größe auf Hauptachsen transformiert (REG) wird.

11. Verfahren nach einem der vorhergehenden Ansprüche, bei welchem das Frequenzspektrum (Aₖ) der Schwerpunktsbewegung erfasst wird.

12. Verfahren nach einem der vorhergehenden Ansprüche, bei welchem die Höhe der Wasserwellen als Seegangsgröße bestimmt wird.

13. Verfahren nach einem der vorhergehenden Ansprüche, bei welchem die Schwerpunktsbewegung vor ihrer Auswertung (REG, FFT, CORR) in erdfeste Koordinaten transformiert (TRAFO) wird.

14. Verfahren nach einem der vorhergehenden Ansprüche, bei welchem die Schwerpunktsbewegung hinsichtlich des Kurses und/oder der Geschwindigkeit des Wasserfahrzeugs korrigiert (TRAFO, PASS) wird.

15. Verfahren nach einem der vorhergehenden Ansprüche, bei welchem Referenzdaten (TAB) aus Messungen und/oder Simulationen für die Fahrt des Wasserfahrzeug vorgehalten werden, welche zur Anpassung und/oder Korrektur (CORR) der ermittelten Seegangsgrößen (α, Aₖ) genutzt werden.

16. Verfahren nach einem der vorhergehenden Ansprüche, bei welchem die Unterschiede der Bootsform in Quer- und Längsrichtung mittels einer Tabelle (TAB) und/oder eines Kennfeldes berücksichtigt und die Seegangsgrößen (α, Aₖ) entsprechend korrigiert (CORR) werden.

## Claims

1. A method for determining sea condition variables (a, Aₖ) on a vessel, with which the centre of gravity movement of the vessel is detected (x), with which parameters of the centre of gravity movement, which are dependent on the sea condition variables (α, Aₖ), are determined, and with which one or more sea condition variables (a, Aₖ) is or are determined (REG, FFT) from these parameters.

2. A method according to claim 1, with which the centre of gravity movement is statistically taken into account in several wave trains passing the vessel.

3. A method according to claim 1 or 2, with which the centre of gravity movement is detected for a duration of 5 to 30 minutes.

4. A method according to one of the claims 1 to 3, with which the propagation direction (a) and/or the wave period of the water waves are determined (REG, FFT) as the sea condition variables (a, Aₖ).

5. A method according to one of the claims 1 to 4, with which the temporal course and/or the value region of at least one kinematic variable of the centre of gravity movement (x) is or are detected.

6. A method according to claim 5, with which the kinematic variable is the location.

7. A method according to claim 6, with which a sea condition variable (a) is the propagation direction (a) of the water waves and with which the orientation of the longest main axis of a path curve, which is described by the centre of gravity of the vessel, is a parameter which is dependent on the sea condition variable (a).

8. A method according to claim 7, with which the average deviation of the centre of gravity movement from the main axis of the path curve is detected and is used as an effectiveness criterion (Q) for the determination of the sea condition variable (a, Aₖ)

9. A method according to one of the claims 5 to 8, with which the kinematic variable is the speed and/or the acceleration.

10. A method according to one of the claims 5 to 9, with which the kinematic variable is transformed (REG) onto main axes.

11. A method according to one of the preceding claims, with which the frequency spectrum (Aₖ) of the centre of gravity movement is detected.

12. A method according to one of the preceding claims, with which the height of the water waves is determined as a sea condition variable.

13. A method according to one of the preceding claims, with which the centre of gravity movement is transformed (TRAFO) into fixed-earth coordinates, before its evaluation (REG, FFT, CORR).

14. A method according to one of the preceding claims, with which the centre of gravity movement is corrected (TRAFO, PASS) with regard to the course and/or the speed of the water vessel.

15. A method according to one of the preceding claims, with which reference data (TAB) from measurements and/or simulations for the travel of the vessel are kept, which are used for adaption and/or correction (CORR) of the determined sea condition variables (a, Aₖ)

16. A method according to one of the preceding claims, with which the differences of the vessel shape in the transverse and longitudinal direction are taken into account by way of a table (TAB) and/or a characteristic field, and the sea condition variables (a, Aₖ) are corrected (CORR) accordingly.

## Revendications

1. Procédé de détermination de grandeurs de houle (a, Aₖ) sur un véhicule marin, dans lequel le mouvement du centre de gravité du véhicule marin est détecté (x), dans lequel sont déterminés des paramètres du mouvement du centre de gravité dépendants des grandeurs de houle (a, Aₖ) et dans lequel, à partir de ces paramètres, sont déterminées (REG, FFT) une ou plusieurs grandeurs de houle (a, Aₖ).

2. Procédé selon la revendication 1, dans lequel le mouvement du centre de gravité est statistiquement pris en compte dans plusieurs trains de vagues traversés par le véhicule marin.

3. Procédé selon la revendication 1 ou 2, dans lequel le mouvement du centre de gravité est détecté pour une durée de 5 à 30 minutes.

4. Procédé selon l'une des revendications 1 à 3, dans lequel la direction de propagation (a) et/ou la période des vagues sont déterminées (REG, FFT) en tant que grandeurs de houle (a, Aₖ).

5. Procédé selon l'une des revendications 1 à 4, dans lequel la variation dans le temps et/ou la plage de valeurs d'au moins une grandeur cinématique du mouvement du centre de gravité est détectée (x).

6. Procédé selon la revendication 5, dans lequel la grandeur cinématique est le lieu.

7. Procédé selon la revendication 6, dans lequel une grandeur de houle (a) est la direction de propagation (a) des vagues et dans lequel l'orientation de l'axe principal le plus long d'une trajectoire, décrite par le centre de gravité du véhicule marin, est un paramètre dépendant de la grandeur de houle (a).

8. Procédé selon la revendication 7, dans lequel l'écart moyen du mouvement du centre de gravité par rapport à l'axe principal de la trajectoire est détecté et utilisé comme critère de qualité (Q) de la détermination de la grandeur de houle (a, Aₖ).

9. Procédé selon l'une des revendications 5 à 8, dans lequel la grandeur cinématique est la vitesse et/ou l'accélération.

10. Procédé selon l'une des revendications 5 à 9, dans lequel la grandeur cinématique est transformée (REG) sur des axes principaux.

11. Procédé selon l'une des revendications précédentes, dans lequel le spectre de fréquences (Aₖ) du mouvement du centre de gravité est détecté.

12. Procédé selon l'une des revendications précédentes, dans lequel la hauteur des vagues est définie en tant que grandeur de houle.

13. Procédé selon l'une des revendications précédentes, dans lequel le mouvement du centre de gravité est transformé (TRAFO) en coordonnées terrestres avant son évaluation (REG, FFT, CORR).

14. Procédé selon l'une des revendications précédentes, dans lequel le mouvement du centre de gravité est corrigé (TRAFO, PASS) par rapport à la route et/ou à la vitesse du véhicule marin.

15. Procédé selon l'une des revendications précédentes, dans lequel sont conservées des données de référence (TAB) provenant de mesures et/ou simulations du trajet du véhicule marin, qui sont utilisées pour l'adaptation et/ou la correction (CORR) des grandeurs de houle (a, Aₖ) déterminées.

16. Procédé selon l'une des revendications précédentes, dans lequel les différences de forme du bateau dans la direction transversale et longitudinale sont prises en compte au moyen d'un tableau (TAB) et/ou d'un champ caractéristique et les grandeurs de houle (a, Aₖ) sont corrigées (CORR) en conséquence.
